(19) Europäisches Patentamt
European Patent Office
Office européen des brevets

(11) **EP 1 987 371 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
***G01S 17/93*** *(2006.01)*     ***G01S 13/93*** *(2006.01)*
***G01S 13/88*** *(2006.01)*

(21) Anmeldenummer: **07704301.6**

(22) Anmeldetag: **01.02.2007**

(86) Internationale Anmeldenummer:
**PCT/EP2007/050980**

(87) Internationale Veröffentlichungsnummer:
**WO 2007/096240 (30.08.2007 Gazette 2007/35)**

(54) **VERFAHREN ZUR DETEKTION VON OBJEKTEN MIT EINER SCHWENKBAREN SENSOREINRICHTUNG**

METHOD FOR DETECTING OBJECTS WITH A PIVOTABLE SENSOR DEVICE

PROCEDE POUR LA DETECTION D'OBJETS AVEC UN DISPOSITIF PIVOTANT A CAPTEURS

(84) Benannte Vertragsstaaten:
**DE FR GB IT**

(30) Priorität: **22.02.2006 DE 102006008275**

(43) Veröffentlichungstag der Anmeldung:
**05.11.2008 Patentblatt 2008/45**

(73) Patentinhaber: **SIEMENS AKTIENGESELLSCHAFT
80333 München (DE)**

(72) Erfinder:
• **POOK, Sebastian
33104 Paderborn (DE)**
• **SOIKA, Martin
84028 Landshut (DE)**

(56) Entgegenhaltungen:
**DE-A1- 4 344 485     DE-A1- 19 937 185
US-B1- 6 466 946**

**Beschreibung**

Die Erfindung betrifft ein Verfahren zur Detektion von Objekten mit einer schwenkbaren, einen Scansensor umfassenden Sensoreinrichtung und eine entsprechende Vorrichtung.

Bei der Navigation von fahrerlosen Transportfahrzeugen werden heutzutage häufig Messungen durch Odometrie und Gyroskopie verwendet. Bei diesen Messungen wird die Position des Fahrzeugs mit Hilfe entsprechender Sensoren auf dem Fahrzeug ermittelt. Insbesondere wird die vom Fahrzeug zurückgelegte Wegdifferenz über Sensoren am Rad des Fahrzeugs erfasst. Die verwendeten Sensoren unterliegen jedoch Messunsicherheiten, die während des Fahrzeugbetriebs zu Positionsfehlern führen. Aufgrund dieser Fehler ist die Navigation fahrerloser Transportfahrzeuge allein mit Odometrie und Gyroskopie nicht möglich. Es müssen deshalb Verfahren zur Verbesserung der Schätzung der Fahrzeugposition verwendet werden.

Solche Verfahren zur Verbesserung der Positionsschätzung verwenden beispielsweise Laserscanner. In einem bekannten Verfahren werden hierbei in einer zweidimensionalen Scanebene des Laserscanners im Bodenbereich des Fahrzeugs Objekte detektiert. Die Scanebene liegt hierbei im Wesentlichen parallel zum Boden, so dass zur Navigation nur Objekte im Bodenbereich herangezogen werden können. Dies ist beim Einsatz von fahrerlosen Transportsystemen im gewerblichen Bereich, insbesondere in Lagerhallen, nachteilhaft. Insbesondere besteht hier das Problem, dass Gegenstände in Lagerhallen oftmals ihre Positionen verändern, so dass ein fahrerloses Transportfahrzeug aufgrund nicht mehr vorhandener oder neu auftauchender Gegenstände sich nicht mehr orientieren kann.

Aus dem Stand der Technik sind neben den soeben beschriebenen zweidimensionalen Navigationssystemen auch Anordnungen bekannt, welche über ein Lasersystem eine dreidimensionale Messung der Fahrzeugumgebung vornehmen. Die Merkmale der Umgebung liegen hierbei in so genannten 3D-Punktwolken vor, wobei zur Navigation die Punktwolken mit vorab ermittelten Punktwolken verglichen werden, um die Eigenposition des Fahrzeugs zu bestimmen. Diese Verfahren sind sehr aufwändig.

DE 199 37 185 offenbart ein Verfahren zur Detektion von Objekten mit einem Schwenkbaren Sensor. US 6466946 beschreibt das sogenannte "Divide-and-Conquer"- Verfahren zur Sortierung von Objekten nach ähnlichen Merkmalen.

Aufgabe der Erfindung ist es deshalb, ein Verfahren zur Detektion von Objekten zu schaffen, welches einfacher als bekannte Verfahren ist und welches auch in Umgebungen eingesetzt werden kann, in der sich Objektpositionen im Bodenbereich und in Fahrzeughöhe oft verändern.

Diese Aufgabe wird durch die unabhängigen Patentansprüche gelöst. Weiterbildungen der Erfindung sind in den abhängigen Patentansprüchen definiert.

In dem erfindungsgemäßen Verfahren sendet ein Scansensor Detektionsstrahlen zur Detektion von Objekten in einem Scanbereich innerhalb einer Scanebene aus, wobei die Position der Scanebene durch Verschwenken der Sensoreinrichtung in einem Schwenkbereich verändert wird, wodurch eine Vielzahl von Detektionsebenen entstehen. Durch die Detektionsstrahlen werden in den Detektionsebenen Detektionspunkte von Objekten in der Umgebung der Sensoreinrichtung detektiert. Aus den Detektionspunkten einer jeweiligen Detektionsebene werden dann Linien extrahiert. Hierzu werden insbesondere aus dem Stand der Technik bekannte Verfahren zur Linienextraktion verwendet, beispielsweise ein so genanntes Divide-and-Conquer-Verfahren, welches in der detaillierten Beschreibung der Erfindung näher erläutert wird. Diese Verfahren haben den Zweck, ebene Flächen von Objekten in der Umgebung zu detektieren, wobei diese ebenen Flächen in der Detektionsebene als Linien dargestellt sind. In einem nächsten Schritt werden dann die Schnittpunkte der Linien mit einer oder mehreren vorbestimmten Messebenen als Messpunkte ermittelt. Ziel des erfindungsgemäßen Verfahrens ist es nun, diese Messpunkte derart zu verarbeiten, dass in der Messebene wiederum Linien mit Hilfe eines Linienextraktionsverfahrens extrahiert werden können. Um dies zu erreichen, werden die Messpunkte in einer jeweiligen Messebene in Blöcke wie folgt einsortiert:

- für einen einzusortierenden Messpunkt wird derjenige Messpunkt ausgewählt, der von den in bereits vorhandenen Blöcken enthaltenen und ein vorgegebenes Distanzkriterium erfüllenden Messpunkten den kleinsten Abstand zum einzusortierenden Messpunkt aufweist, wobei das vorgegebene Distanzkriterium für einen jeweiligen Messpunkt in einem jeweiligen Block erfüllt ist, wenn die Distanz des einzusortierenden Messpunkts zu dem jeweiligen Messpunkt kleiner als ein Distanzmaß ist, welches von der Distanz des jeweiligen Messpunkts zu einem benachbarten Messpunkt des jeweiligen Blocks abhängt;

- der einzusortierende Messpunkt wird benachbart zu dem ausgewählten Messpunkt in dem Block einsortiert, der den ausgewählten Messpunkt enthält.

Durch das von den Erfindern entwickelte Distanzkriterium, welches insbesondere die Distanz eines Messpunkts zu einem benachbarten Messpunkt berücksichtigt, wird ein geeignetes Kriterium geschaffen, mit dem Punkte, welche zu dem gleichen Beobachtungsbereich des Scansensors gehören, geeignet zu Blöcken zusammengefasst werden. Anschließend können dann wiederum blockweise aus den Messpunkten der erzeugten Blöcke Linien extrahiert werden.

Es wird hierdurch ermöglicht, aus dem Stand der Technik bekannte Linienextraktionsverfahren in einer Messebene einzusetzen.

Durch das erfindungsgemäße Verfahren wird auf sehr einfache Weise eine Detektion von Objekten in einer so genannten "virtuellen Messebene" ermöglicht, ohne dass in der eigentlichen Messebene gemessen wurde. Die Messebene entsteht vielmehr durch einen Schnitt durch alle Detektionsebenen. Es wird hierbei insbesondere ermöglicht, dass die Sensoreinrichtung auch Objekte in Höhenebenen erfasst, die oberhalb der Sensoreinrichtung liegen. Vor allem können Objekte im Deckenbereich einer Lagerhalle erfasst werden. Es kann somit eine Navigation in einer Lagerhalle ermöglicht werden, in der sich die Lage von Objekten im Bodenbereich ständig verändern, da solche Objekte im Bodenbereich nicht zur Navigation herangezogen werden. Vielmehr werden nur Objekte im Deckenbereich betrachtet, welche ihre Position üblicherweise nicht oder nur selten verändern.

In einer bevorzugten Ausführungsform der Erfindung hat es sich als vorteilhaft erwiesen, dass der einzusortierende Messpunkt hinter dem ausgewählten Messpunkt einsortiert wird.

Sollte es sich im erfindungsgemäßem Verfahren für einen einzusortierenden Messpunkt ergeben, dass eine Einsortierung in einem vorhandenen Block gemäß der Kriterien der Erfindung nicht möglich ist, wird ein neuer Block für den einzusortierenden Messpunkt gebildet. Ebenso wird im Falle, dass beim Beginn des Verfahrens noch keine Blöcke vorhanden sind, ein Block durch den einzusortierenden Messpunkt und dem Messpunkt mit der kleinsten Distanz zu dem einzusortierenden Messpunkt gebildet.

In einer besonders bevorzugten Ausführungsform des erfindungsgemäßen Verfahrens ist das vorgegebene Distanzkriterium für einen jeweiligen Messpunkt dann erfüllt, wenn der einzusortierende Messpunkt zu dem jeweiligen Messpunkt eines Paars von benachbarten Messpunkten in dem jeweiligen Block eine Distanz aufweist, welche kleiner als die mit einem Faktor multiplizierte Distanz zwischen den Messpunkten des Paars ist, wobei der Faktor größer oder gleich 1 ist.

In einer besonders bevorzugten Ausführungsform ist der Faktor kleiner als 2, vorzugsweise im Wesentlichen 1,5. Es hat sich gezeigt, dass durch die Wahl des Faktors in diesem Bereich sehr gute Ergebnisse bei der Sortierung der Messpunkte in die Blöcke erreicht werden. Insbesondere arbeitet das nachfolgende Linienextraktionsverfahren sehr gut.

In einer weiteren Ausführungsform wird ferner sichergestellt, dass nur Messpunkte beim Einsortieren betrachtet werden, deren absoluter Abstand nicht zu groß wird. Deshalb wird in einer Ausführungsform des Verfahrens der einzusortierende Messpunkt nur dann in dem Block einsortiert, der den ausgewählten Messpunkt enthält, wenn die Distanz des ausgewählten Messpunkts zum einzusortierenden Messpunkt kleiner als ein vorbestimmtes Absolutmaß ist.

Es hat sich gezeigt, dass das erfindungsgemäße Verfahren besonders gut arbeitet, wenn der einzusortierende Messpunkt nur dann in den Block, der den ausgewählten Messpunkt enthält, einsortiert wird, wenn die Distanz zwischen dem einzusortierenden Messpunkt und einer durch die Messpunkte des Blocks und des einzusortierenden Messpunkts approximierte Ausgleichsgerade einen vorbestimmten Wert unterschreitet.

Um in dem erfindungsgemäßen Verfahren in geeigneter Weise auch Blöcke zu berücksichtigen, die nur aus einem Messpunkt bestehen, wird der Messpunkt dieses Blocks immer als ein das vorgegebne Distanzkriterium erfüllender Messpunkt behandelt. Das heißt, dass Blöcke, die nur einen Messpunkt enthalten, beim Einsortieren eines neuen Messpunkts immer berücksichtigt werden.

In einer besonders bevorzugten Ausführungsform laufen die Schritte des Einsortierens von Messpunkten parallel während des Verschwenkens der Sensoreinrichtung und der Detektion durch den Detektionsstrahl ab. Auf diese Weise wird ein Echtzeitverfahren zur Extraktion von Linien aus virtuellen Messebenen geschaffen.

Im Falle, dass das Verfahren in einem führerlos fahrenden Fahrzeug verwendet wird, kann gegebenenfalls der Fall auftreten, dass sich das Fahrzeug derart bewegt, dass Linien, die am Anfang des Verschwenkens extrahiert werden, das gleiche Objekt betreffen wie Linien, die am Ende des Verschwenkens extrahiert werden. Deshalb wird in einer besonders bevorzugten Ausführungsform des erfindungsgemäßen Verfahrens nach einem Verschwenken der Sensoreinrichtung von einem Ende des Schwenkbereichs zum anderen Ende des Schwenkbereichs anhand eines Abstandskriteriums überprüft, ob erzeugte Blöcke zu größeren Blöcken zusammengefasst werden können.

Das erfindungsgemäße Verfahren wird vorzugsweise zur Navigation von führerlos fahrenden Fahrzeugen eingesetzt. In diesem Fall werden die extrahierten Linien mit Linien von vorab erfassten, in einem Speicher hinterlegten Objekten verglichen, und bei einer Übereinstimmung das Fahrzeug mit Hilfe der Positionsdaten der Linie lokalisiert. Zur Abschätzung und Berechnung der Position des Fahrzeugs wird beispielsweise der hinlänglich aus dem Stand der Technik bekannte Kalman-Filter verwendet.

Vorzugsweise sind in dem erfindungsgemäßen Verfahren die Detektionsebenen sich im Wesentlichen in vertikaler Richtung erstreckende Ebenen, und das Sensorsystem wird um eine im Wesentlichen vertikale Achse verschwenkt. Hierdurch kann ein sehr großer Detektionsbereich gewährleistet werden. Die Messebenen sind dabei vorzugsweise horizontale Ebenen, die sich oberhalb des Sensorsystems befinden. Der Schwenkbereich kann beispielsweise einen Winkelbereich von im Wesentlichen 90 Grad umfassen und der Scanbereich kann z. B. in einem Winkelbereich von wenigstens 180 Grad, insbesondere von im Wesentlichen 190 Grad liegen. Um Objekte im Deckenbereich sehr gut zu detektieren, ist der Scansensor beim Verschwenken in einem Neigungswinkel um eine vertikale Schwenkachse nach oben gerichtet, vorzugsweise mit einem Neigungswinkel von im Wesentlichen 45 Grad. Besonders genaue Positionsmessungen lassen. sich darüber hinaus mit einem Scansensor in der Form eines Laserscanners erzielen.

Neben dem oben beschriebenen Verfahren betrifft die Erfindung ferner eine Vorrichtung zur Detektion von Objekten, mit der das erfindungsgemäße Verfahren durchgeführt werden kann. Insbesondere beinhaltet diese Vorrichtung eine Rechnereinheit, welche die Linienextraktion, die Berechnung der Schnittpunkte sowie das Einsortieren von Messpunkten gemäß dem erfindungsgemäßen Verfahren durchführt.

Ein besonders bevorzugter Anwendungsbereich dieser Vorrichtung ist die Verwendung in führerlosen Fahrzeugen, wobei die Vorrichtung in diesem Fall zum führerlosen Navigieren des Fahrzeugs eingesetzt wird, und zwar indem die extrahierten Linien in der jeweiligen Messebene mit vorab erfassten, in einem Speicher hinterlegten Linien von Objekten verglichen werden. Das Fahrzeug ist hierbei vorzugsweise ein Roboter, insbesondere ein automatisch fahrender Gabelstapler oder eine automatisch fahrende Reinigungsmaschine.

Ausführungsbeispiele der Erfindung werden nachfolgend anhand der beigefügten Figuren detailliert beschrieben:

Es zeigen:

Fig. 1            eine Seitenansicht der in einer Ausführungsform des erfindungsgemäßen Verfahrens verwendeten Sensoreinrichtung;

Fig. 2            eine schematische Darstellung zur Verdeutlichung der im erfindungsgemäßen Verfahren durchgeführten Transformationen zur Ermittlung der Position von Detektionspunkten;

Fig. 3            eine perspektivische Darstellung der in einem Schritt des erfindungsgemäßen Verfahrens extrahierten Linien in vertikalen Detektionsebenen;

Fig. 4            eine schematische Darstellung der im erfindungsgemäßen Verfahren verwendeten Methode zur Extraktion von Linien aus Detektionspunkten bzw. Messpunkten;

Fig. 5            eine schematische Darstellung zur Verdeutlichung der gemäß dem erfindungsgemäßen Verfahren gelösten Problemstellung;

Fig. 6 und Fig. 7    schematische Darstellungen zur Verdeutlichung der im erfindungsgemäßen Verfahren verwendeten Methode zum Einsortieren von Messpunkten in Blöcke.

In der nachfolgend beschriebenen Ausführungsform der Erfindung wird das Verfahren zur Roboter-Navigation, das heißt zum führerlosen Fahren einer Maschine in einem begrenzten räumlichen Bereich, eingesetzt. Das Verfahren kommt hierbei insbesondere für im gewerblichen Bereich genutzte Roboter, beispielsweise für einen in einer industriell genutzten Halle führerlos fahrenden Gabelstapler, in Betracht. Dort besteht das Problem, dass der Roboter sich schwierig an räumlichen Merkmalen im unteren Bereich der Halle orientieren kann, da in Industriehallen sehr oft Gegenstände bewegt und versetzt werden, so dass immer wieder neue Objekte detektiert werden, die dem Roboter nicht bekannt sind. Somit kann sich der Roboter sehr schlecht selbst lokalisieren. Demzufolge kann der Roboter sich nicht selbstständig durch die Lagerhalle navigieren, um Aufgaben gemäß einem vorgegebenen Einsatzfahrplan zu erfüllen.

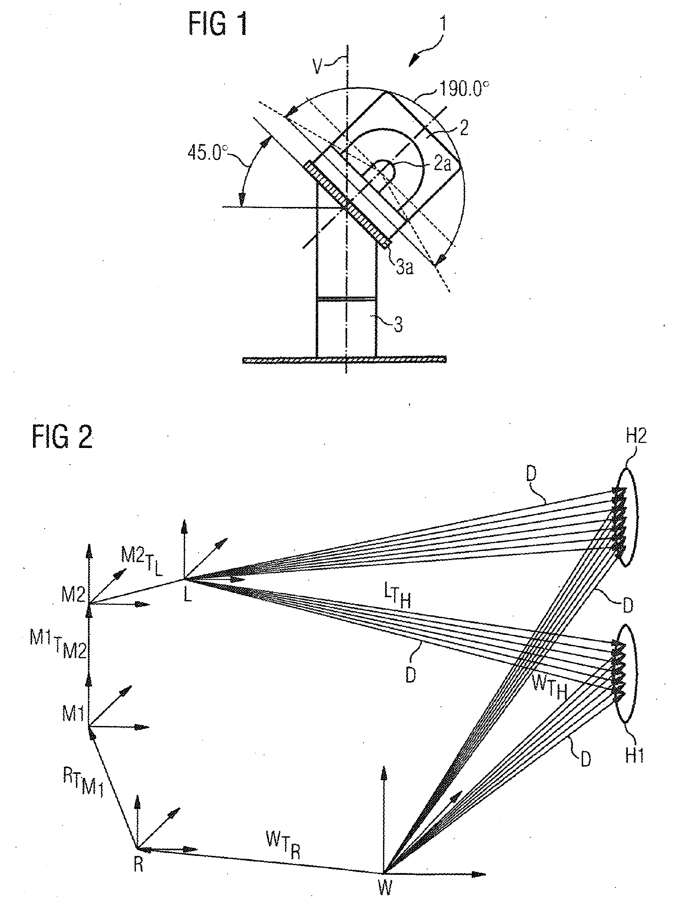

Zur Lösung des soeben dargestellten Problems wird gemäß dem erfindungsgemäßen Verfahren in der hier beschriebenen Ausführungsform eine Sensoreinrichtung derart auf dem Roboter aufgebracht, dass sie den Bereich der Decke der Lagerhalle erfasst, der sich üblicherweise nicht verändert. Um die Decke zu detektieren, wird gemäß Fig. 1 eine Sensoreinrichtung 1 verwendet, welche einen Laserscanner 2 mit einer Laserquelle 2a aufweist, wobei die Laserquelle Laserstrahlen in einer vertikalen Scanebene (das heißt in der Blattebene der Fig. 1) erzeugt, und zwar innerhalb eines Scanbereichs von 190 Grad. Der Laserscanner 2 ist auf einem Sockel 3 befestigt, der an der Oberseite eine in einem Winkel von 45 Grad zur Horizontalen schräg verlaufende Platte 3a aufweist. Der Sockel ist hierbei um eine vertikale Achse V in einem Schwenkbereich von 90 Grad mit Hilfe eines Schwenkmotors hin und her schwenkbar. Aufgrund der Ausrichtung des Laserscanners 2 nach oben sowie aufgrund des weit öffnenden Scanbereichs von 190 Grad wird gemäß der in Fig. 1 gezeigten Anordnung der Deckenbereich einer Halle erfasst, in welcher sich ein Roboter mit darauf befestigter Sensoreinrichtung 1 bewegt. Da zur Navigation des Roboters bekannte Objekte (auch als Merkmale bezeichnet) im Deckenbereich verwendet werden sollen, muss es ermöglicht werden, dass Objekte in einer horizontalen Messebene im Deckenbereich erfasst werden. Dies wird durch das erfindungsgemäße Verfahren bewerkstelligt, wie weiter unten noch näher erläutert wird.

Das Prinzip der Navigation eines Roboters beruht darauf, dass der Roboter durch Entfernungsmessungen mit Hilfe des in Fig. 1 gezeigten Laserscanners ihm bekannte Objekte im Raum ermittelt und hierüber seine eigene Position in einer gespeicherten Karte feststellt. Um dies zu ermöglichen, muss der Roboter seine Position in einem festgelegten Referenz-Koordinatensystem bestimmen, welches auch als Welt-Koordinatensystem W bezeichnet wird. Dieses Welt-Koordinatensystem ist das globale Bezugssystem, in dem der Roboter sich bewegt und in dem er sich lokalisiert. Darüber hinaus gibt es das so genannte Roboter-Koordinatensystem R, welches das lokale Bezugssystem des Roboters ist. Abhängig von der Festlegung des Ursprungs erfolgt die Modellierung des Roboters im Roboter-Koordinatensystem. Die Auswertung der Laserdistanzmessungen erfolgt ebenfalls im Roboter-Koordinatensystem. Darüber hinaus existiert das so genante Laser-Koordinatensystem L. Dieses System ist das Bezugssystem, in welchem die Laserdistanzmessungen durch den Laserscanner 2 angegeben werden. Um die Distanzmessungen sinnvoll verarbeiten zu können, werden diese Messungen zunächst von Polar-Koordinaten in kartesische Koordinaten im Laser-Koordinatensystem umgerechnet. Hierzu werden in einem ersten Transformationsschritt aus den ermittelten Distanzen und dem Winkelinkrement zwischen den Laserstrahlen Punkte in kartesischen Koordinaten berechnet. Um diese Daten für die im erfindungsgemäßen Verfahren durchgeführte Extraktion von Merkmalen zur Detektion von Objekten nutzbar zu machen, sind noch weitere Transformationsschritte notwendig. Diese Transformationen dienen zur Modellierung der Montageposition des Laserscanners 2 auf dem Roboter und berücksichtigen hierbei die Montageposition des Laserscanners auf dem Schwenkmotor, die Stellung des Schwenkmotors zum Zeitpunkt des Laserscans sowie die Montageposition des Schwenkmotors auf dem Roboter. Um die mit dem Laserscanner erfassten Objekte in WeltKoordinaten angeben zu können, sind die folgenden Transformationsschritte notwendig:

$^{L}T_{H}$: Transformation von Polar-Koordinaten der detektierten Hindernisse H in kartesische Koordinaten, das heißt Punkte im Laser-Koordinatensystem. Die Umrechnung erfolgt anhand der gemessenen Distanzen und der Differenz der Winkel zwischen den einzelnen Laserstrahlen. Diese Differenz ist konstant und beträgt in dem Laserscanner, der in der hier beschriebenen Ausführungsform verwendet wird, 0,36 Grad.

$^{M2}T_{L}$: Diese Transformation beschreibt die Montageposition des Laserscanners in Bezug auf ein sich verschwenkendes Koordinatensystem M2 des Schwenkmotors. Die Montageposition des Laserscanners ist durch den Aufbau des Messsystems fest vorgegeben.

$^{M1}T_{M2}$: Diese Transformation beschreibt die Motorstellung des Schwenkmotors in Bezug auf ein Referenzkoordinatensystem M1 des Motors. Die Transformation enthält nur einen variablen Winkel. Dieser Winkel wird durch die Funktion zur Steuerung des Schwenkmotors bestimmt.

$^{R}T_{M1}$: Diese Transformation beschreibt die Montagepositionen M1 des Schwenkmotors relativ zum Roboter-Koordinatensystem R.

$^{W}T_{R}$: Diese Transformation dient der Berechnung der RoboterPosition im Weltkoordinatensystem W. Durch die Bestimmung dieser Transformation kann sich der Roboter lokalisieren. Der Ursprung des Welt-Koordinatensystems ist in der hier beschriebenen Ausführungsform der Startpunkt des Roboters.

$^{W}T_{H}$: Diese Transformation dient der Umrechnung der erfassten Objekte (Hindernisse) von Distanzmessungen in Weltkoordinaten.

Zur Darstellung der Messungen in Weltkoordinaten ergibt sich dann folgende Berechnungsvorschrift:

$$^{W}T_{H} = {}^{W}T_{R} \cdot {}^{R}T_{M1} \cdot {}^{M1}T_{M2} \cdot {}^{M2}T_{L} \cdot {}^{L}T_{H} .$$

Fig. 2 verdeutlicht nochmals schematisch die Lage der einzelnen Koordinatensysteme W, R, M1, M2 und L zueinander sowie die oben genannten Transformationen zwischen den Koordinatensystemen. Zur Veranschaulichung sind Bündel von Distanzlinien D zu jeweils zwei Objekten H1 und H2 sowohl im Koordinatensystem L als auch im Koordinatensystem W wiedergegeben.

In dem erfindungsgemäßen Verfahren werden die Eigenschaften von Objekten in der Form von Linien erfasst, wobei eine Linie im Wesentlichen eine ebene Fläche, z. B. eine Wand in der Umgebung des Roboters, darstellt. Um die Anzahl der zur Linienextraktion verwendeten Detektionspunkte des Laserscanners zu begrenzen, wird eine Linienextraktion jeweils immer nur auf die Menge der Detektionspunkte angewendet, welche beim Verfahren des Sensorsystems von einem Ende zum anderen Ende des Schwenkbereichs detektiert werden. Die Fahrbewegung von einem Ende zum anderen Ende des Schwenkbereichs wird hierbei auch als Motorschwenk bezeichnet. Da sich während eines Motorschwenks ferner auch die Position des fahrenden Roboters verändert, müssen die in einem Schwenk erfassten Daten in ein gemeinsames Bezugssystem transformiert werden. Als Ursprung dieses gemeinsamen Bezugssystems wird hierbei die Roboterposition $R_0$ zum Zeitpunkt der Richtungsänderung des Schwenkmotors festgelegt. Die darauf folgenden Scans i liegen zunächst in den Roboter-Koordination $R_i$ der veränderten Roboterposition vor. Es wird auf die in einer Roboterposition $R_i$ durch einen Laserscanner erfassten Positionen deshalb die Transformation $^{R0}T_{Ri}$ angewendet, welche die Koordinaten im Roboter-Koordinatensystem $R_i$ in das Roboter-Koordinatensystem $R_0$ transformiert. Mit Hilfe der oben erwähnten Transformation $^{W}T_{R}$, welche Roboterkoordinaten in Weltkoordinaten transformiert, kann die Transformation vom Roboter-Koordinatensystem $R_i$ zum Roboter-Koordinatensystem $R_0$ durch die Transformation vom Koordinatensystem $R_0$ zum Welt-Koordinatensystem W und der Inversen der Transformation vom Koordinatensystem $R_0$ in das Koordinatensystem W wie folgt dargestellt werden:

$$^{R0}T_{Ri} \;=\; (^{W}T_{R0})^{-1} \cdot {}^{W}T_{Ri}$$

Auf diese Weise wird für alle in einem Motorschwenk ermittelten Detektionspunkte ein gemeinsames Bezugssystem festgelegt und es können hieraus die dreidimensionalen Positionen der Detektionspunkte im Bezugssystem $R_0$ ermittelt werden.

Um die Fülle an Detektionspunkten weiter zu reduzieren, werden mit Hilfe eines so genannten Linienextraktionsverfahrens, welches weiter unten noch näher beschrieben wird, die bei einem Scan in einer Scanebene ermittelten Linien extrahiert. Die Linien stellen hierbei detektierte ebene Flächen dar. In der hier beschriebenen Ausführungsform des erfindungsgemäßen Verfahrens liegt die Scanebene bei der Detektion in vertikaler Richtung, so dass immer jeweils in der vertikalen Scanebene verlaufende Linien (im Folgenden auch als "vertikale Linien" bezeichnet) extrahiert werden.

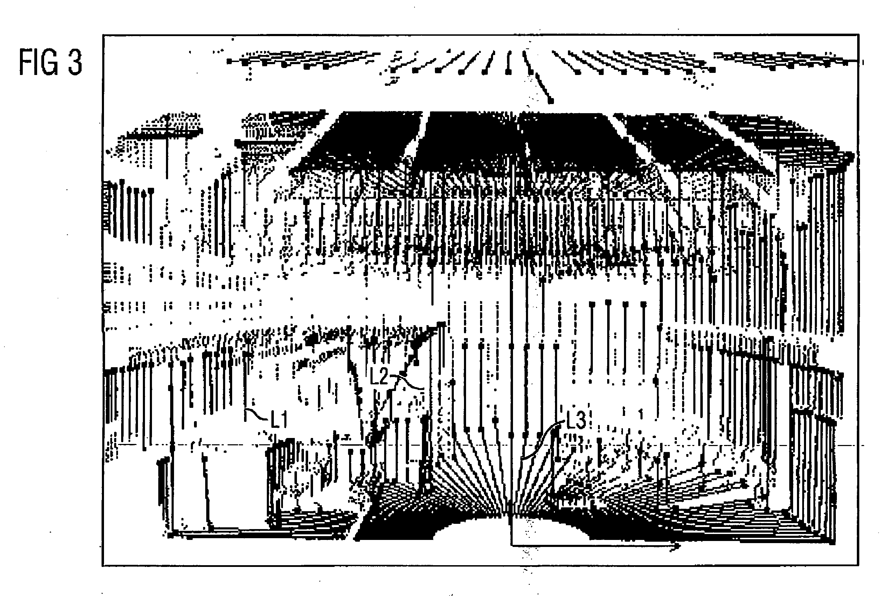

Fig. 3 zeigt anschaulich die auf diese Weise durch einen Schwenk des Laserscanners ermittelten vertikalen Linien bei der Detektion einer Umgebung in einer Industriehalle. Beispielhaft wurden drei Linien mit den Bezugszeichen L1, L2 und L3 bezeichnet.

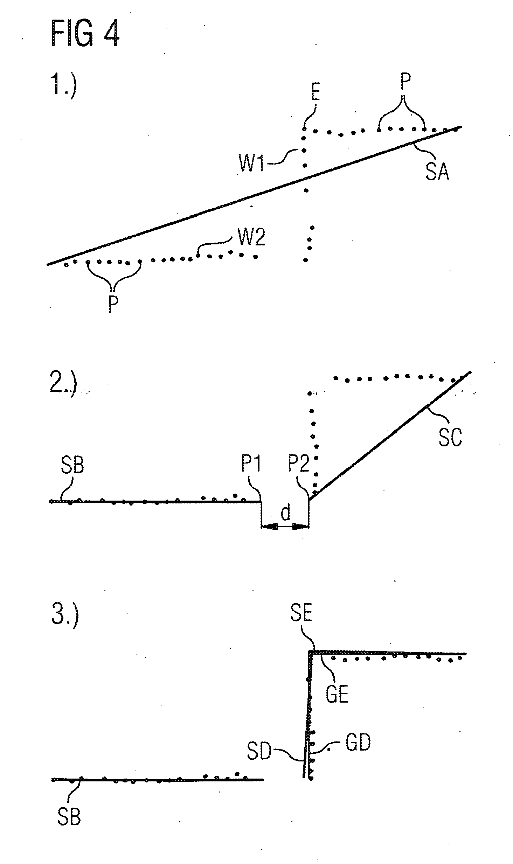

In Fig. 4 ist schematisch dargestellt, wie innerhalb einer Scanebene oder einer weiter unten noch näher beschriebenen Messebene M mit einem Linienextraktionsverfahren Linien aus den Detektions- bzw. Messpunkten gebildet werden können. Das hierzu verwendete Verfahren ist ein hinlänglich aus dem Stand der Technik bekanntes Verfahren, welches auch unter dem Namen "Divide-and-Conquer" bekannt ist. In Fig. 4 sind in den einzelnen Diagrammen 1.), 2.) und 3.) die Schritte eines solchen Verfahrens dargestellt. Fig. 4 zeigt eine Vielzahl von erfassten Detektions- bzw. Messpunkten P, welche eine um eine Ecke E verlaufende Wand W1 sowie eine im Abstand d von der Wand W1 angeordnete Wand W2 darstellen. Aus Übersichtlichkeitsgründen sind nur einige der Messpunkte mit dem Bezugszeichen P versehen.

Bei der Linienextraktion werden die Messpunkte zunächst in Segmente mit variabler Anzahl an Messpunkten unterteilt. In einer Menge von Messpunkten werden zwei Segmente unterschieden, wenn die Distanz zwischen zwei Punkten einen maximalen Wert übersteigt. Die Messpunkte liegen hierbei in einer sortierten Reihenfolge vor, beispielsweise gemäß dem Austrittswinkel des Laserstrahls im Falle, dass die Punkte durch einen Laserstrahl in einer Scanebene detektiert wurden. Für jedes Segment wird hierbei eine Segmentgerade festgelegt, welche den Anfangs- und Endpunkt des Segments miteinander verbindet. In den Schritten 1.) und 2.) ist die Segmentierung dargestellt. Zunächst liegt ein einziges Segment A vor, welches durch die Segmentgerade SA charakterisiert ist. Es werden dann die Abstände zwischen den einzelnen sortierten Punkten überprüft, wobei sich in dem Fall der Fig. 4 ergibt, dass der Abstand d zwischen den Segmentpunkten P1 und P2 einen vorgegebenen maximalen Wert überschreitet. Daraufhin werden zwei Segmente B und C gebildet, welche durch die Segmentgeraden SB und SC dargestellt sind.

Die Linienextraktion innerhalb der Segmente erfolgt schließlich durch ein rekursives Verfahren. Dieses wird auf jedes Segment angewendet und unterteilt diese wiederum in kleinere Segmente. Hierbei wird zunächst eine Ausgleichsgerade durch alle Messpunkte eines Segments berechnet, wobei die Ausgleichsgerade eine über die Messpunkte des Segments gemittelte Gerade ist, welche beispielsweise über lineare Regression bestimmt wird. Es wird dann der Abstand der Ausgleichsgerade zu den einzelnen Messpunkten im Segment bestimmt Sollte der Abstand eines Messpunkts eine festgelegte maximale Distanz zu der Ausgleichsgerade überschreiten, wird das Segment an diesem Punkt unterteilt. Es entstehen so zwei neue Segmente. In der weiteren Verarbeitung wiederholt sich dieser Vorgang rekursiv für alle so entstehenden Segmente. Das Verfahren endet, wenn kein zerlegbares Segment mehr vorhanden ist. Ein Segment ist nicht mehr zerlegbar, wenn entweder kein Punkt im Segment den maximalen Abstand zur Ausgleichsgeraden überschreitet oder wenn das Segment eine minimale Punkteanzahl unterschritten hat. Im letzteren Fall endet das Verfahren mit einem Misserfolg, das heißt es konnte keine Linie extrahiert werden.

Das Ergebnis einer solchen rekursiven Verarbeitung ist in Fig. 4 im Diagramm 3.) gezeigt. Hier ist ersichtlich, dass das Segment mit der Segmentlinie SB bereits eine extrahierte Linie darstellt, da die Abstände der Punkte zu der berechneten Ausgleichsgeraden kleiner als ein festgelegter Maximalwert sind. Demgegenüber hat die auf das Segment C angewendete Rekursion zu zwei neuen Segmenten D und E geführt, deren Segmentlinien mit SD und SE bezeichnet sind. Darüber hinaus sind die Ausgleichsgeraden GE und GD in Fig. 4 dargestellt. Man erkennt, dass der Algorithmus richtig den Verlauf der Wände W1 und W2 durch die Extraktion entsprechender Linien ermittelt hat.

Das soeben beschriebene Segmentierverfahren ist lediglich ein Beispiel, auf welche Weise Linien aus einer Anzahl von Messpunkten extrahiert werden können. Gegebenenfalls können auch andere aus dem Stand der Technik bekannte Verfahren zur Linienextraktion eingesetzt werden.

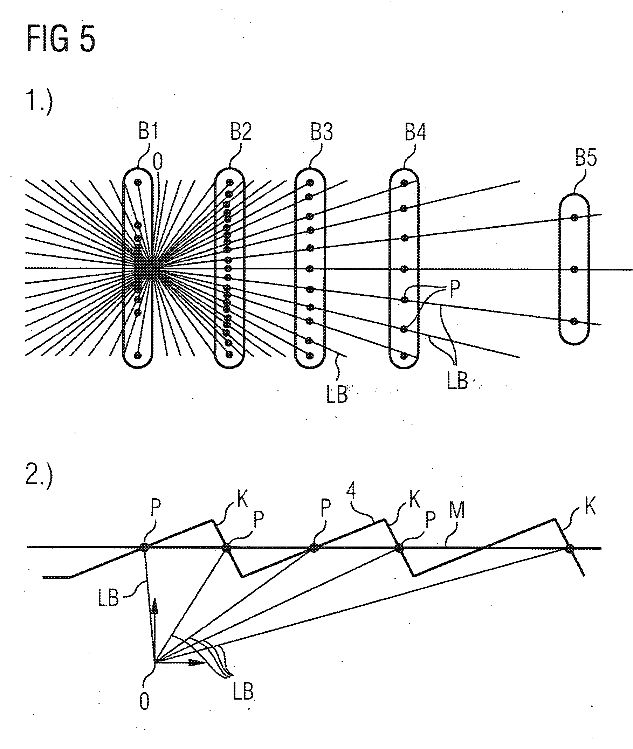

In dem erfindungsgemäßen Verfahren werden zunächst mit einer Methode nach dem Stand der Technik vertikale Linien extrahiert, und zwar beispielsweise mit den in Fig. 4 gezeigten Verfahren. Um nunmehr Objekte im Dekkenbereich zu detektieren, werden diese Linien mit Höhenebenen oberhalb des Roboters im Deckenbereich geschnitten. Es ergeben sich hieraus eine Vielzahl von Schnittpunkten in jeder Höhenebene. Diese Schnittpunkte werden als Messpunkte bezeichnet und stellen im eigentlichen Sinne nicht gemessene Punkte, sondern virtuelle Punkte dar. Es entsteht hierbei das Problem, dass die Messpunkte nicht sortiert sind, so dass das oben beschriebene Verfahren zur Linienextraktion nicht ohne Weiteres in der horizontalen Höhenebene angewendet werden kann. Insbesondere ist es problematisch, dass durch das Schneiden der vertikalen Linien mit Höhenebenen auch hintereinander liegende Messpunkte erfasst werden, welche bei einem tatsächlichen Scan in der entsprechenden Höhenebene nicht erfasst werden würden. Dieses Problem wird in Fig. 5 anhand einer scheddachförmigen Deckenkonstruktion in einer Lagerhalle erläutert. Das Diagramm 2 in Fig. 5 zeigt die geschnittene Seitenansicht einer solchen scheddachförmigen Decke 4. Ferner ist die Lage einer Höhenebene M dargestellt, welche mit den zuvor extrahierten Linien geschnitten wird. Es werden hierdurch eine Vielzahl von Messpunkten P ermittelt, wobei in Fig. 4 ferner für jeden dieser Messpunkte der Laserstrahl LB eingezeichnet ist, der bei einem Scan in vertikaler Richtung für die Detektion dieses Punktes verantwortlich ist.

Das Diagramm 1 in Fig. 5 zeigt das gleiche Szenario wie das Diagramm 2, jedoch in Draufsicht von oben. Die Laserstrahlen LB gehen hierbei von der Montageposition O des Laserscanners auf dem Roboter aus. Da die einzelnen Messpunkte P in unsortierter Reihenfolge vorliegen und zu unterschiedlichen Beobachtungswinkeln gehören, kann ein herkömmliches Linienextraktionsverfahren nicht ohne Weiteres angewendet werden. Vielmehr muss zunächst ermittelt werden, welche Punkte zu der gleichen Beobachtungsrichtung gehören. Dieses Problem wird in dem erfindungsgemäßen Verfahren dadurch gelöst, dass gemäß einem vorgegebenen Kriterium die Punkte in einzelne Blöcke einsortiert werden, wobei das Sortier-Kriterium derart gewählt ist, dass alle Punkte innerhalb eines Blocks im Wesentlichen der gleichen Beobachtungsrichtung entsprechen.

Im Diagramm 1 der Fig. 5 sind entsprechende Blöcke B1, B2, B3, B4 und B5 gezeigt, welche gemäß dem erfindungsgemäßen Verfahren erzeugt werden. Jeder Block entspricht hierbei einer kurzen Kante K des Scheddachs, so dass die einzelnen Messpunkte innerhalb der einzelnen Blöcke bei entsprechender Sortierung wiederum mit einem Linienextraktionsverfahren aus dem Stand der Technik extrahiert werden können.

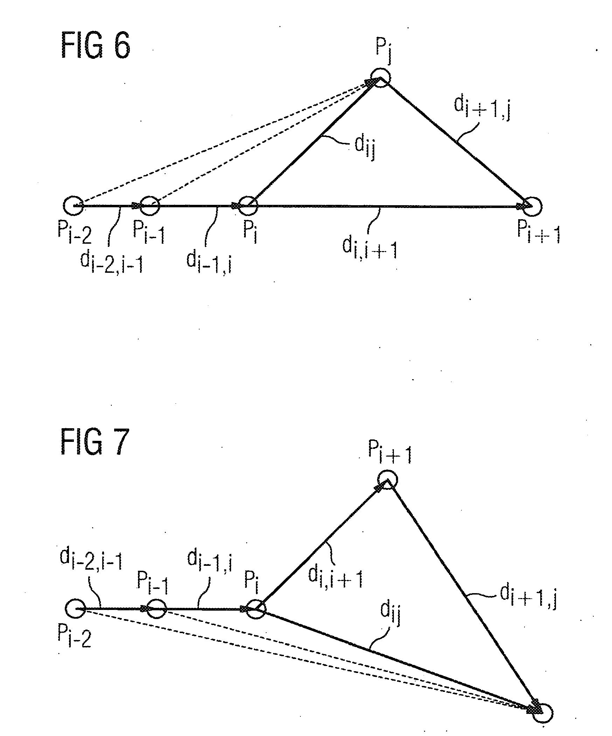

Um eine derartige Einteilung in Blöcke B1 bis B5 zu erreichen, wurde von den Erfindern ein geeignetes Verfahren entwickelt, mit dem bei einem Scan neu hinzukommende Messpunkte in der Messebene M in Blöcke einsortiert werden, so dass eine nummerierte Reihenfolge der Messpunkte in den Blöcken gebildet wird. Dieses Verfahren wird anhand von Fig. 6 und Fig. 7 erläutert. Zu Beginn des Verfahrens liegen noch überhaupt keine Blöcke vor. Ein erster Block wird dann beispielsweise durch zwei Messpunkte gebildet, deren Distanz zueinander einen vorbestimmten Wert unterschreitet.'Kommt ein Messpunkt hinzu, wird überprüft, ob die Distanz des hinzukommenden Messpunkts zu beiden Punkten des ersten Blocks kleiner als das 1,5-fache der Distanz zwischen den Punkten des ersten Blocks ist. Ist dies der Fall, wird der hinzugekommene Messpunkt hinter dem Messpunkt einsortiert, der die geringste Distanz zum einzusortierenden Messpunkt aufweist, sofern diese geringste Distanz kleiner als ein vorbestimmter Maximalwert ist. Sollte das obige Distanzkriterium nicht erfüllt bzw. der Maximalwert überschritten sein, wird für den Messpunkt ein neuer Block gebildet. Anschließend wird für einen neu hinzugekommen Messpunkt überprüft, zu welchem Messpunkt der neue Messpunkt den kleinsten Abstand aufweist. Sollte der kleinste Abstand zwischen dem neuen Messpunkt und einem Messpunkt in dem bereits vorhandenen Block aus mehreren Messpunkten liegen, wird der neue Messpunkt in dem vorhandenen Block aus mehreren Messpunkten einsortiert, sofern der kleinste Abstand kleiner als der Maximalwert und kleiner als das 1,5-fache der Distanz des Messpunkts im Block zu einem seiner Nachbarpunkte ist. Anderenfalls wird der Messpunkt in einem Block, der nur einen Messpunkt enthält, einsortiert, wenn die Distanz zwischen diesen Messpunkten die kleinste ist oder wenn das Kriterium der 1,5-fachen Distanz zu Nachbarpunkten für den Messpunkt in dem Block aus mehreren Messpunkten nicht erfüllt war, wobei ferner der Abstand zwischen dem einzusortierenden Messpunkt und dem Messpunkt in dem Block aus dem einzelnen Messpunkt den Maximalwert unterschreiten muss. Ist dies auch nicht der Fall, wird wiederum ein neuer Block mit einem einzelnen Messpunkt gebildet.

Fig. 6 verdeutlicht das Einsortieren der Messpunkte anhand eines Ausschnitts aus einem bereits existierenden Block mit in dem Block einsortierten Messpunkten $P_{i-2}$, $P_{i-1}$, $P_i$ und $P_{i+1}$. Es wird hierbei überprüft, ob ein neuer, einzusortierender Messpunkt $P_j$ in diesen Block einsortiert werden kann. Hierzu werden die Distanz $d_{i-2,i-1}$ zwischen den Messpunkten $P_{i-2}$ und $P_{i-1}$, die Distanz $d_{i-1,i}$ zwischen den Messpunkten $P_{i-1}$ und $P_i$ sowie die Distanz $d_{i,i+1}$ zwischen den Messpunkten $P_i$ und $P_{i+1}$ betrachtet. Für jede Distanz wird hierbei überprüft, ob der Abstand des Punktes $P_j$ zu jedem der beiden Endpunkte der Distanz kleiner als das 1,5-fache der Distanz selbst ist. Dieses Kriterium ist nicht für die Distanzen $d_{i-2,i-1}$ und $d_{i-1,i}$ erfüllt.

Für die Distanz $d_{i,i+i}$ erfüllt die Distanz $d_{ij}$ das Kriterium, dass sie kleiner als das 1,5-fache von $d_{i,i+1}$ ist. Die Distanz $d_{i+i,j}$ erfüllt dieses Kriterium nicht, denn sie ist länger als das 1,5-fache von $d_{i,i+1}$. Gemäß der hier beschriebenen Ausführungsform des erfindungsgemäßen Verfahrens wird der Punkt $P_j$ dann hinter dem Punkt einsortiert, der die kürzeste Distanz zu $P_j$ aufweist, das heißt der Punkt $P_j$ wird zwischen $P_i$ und $P_{i+1}$ einsortiert .

Fig. 7 zeigt ein ähnliches Szenario wie Fig. 6, wobei ebenfalls ein Ausschnitt eines Blocks mit den Messpunkten $P_{i-2}$, $P_{i-1}$, $P_i$ und $P_{i+1}$ betrachtet wird. Für die Distanzen zwischen den Punkten wurden die gleichen Bezeichnungen wie in Fig. 6 verwendet. Analog zu Fig. 6 ist für die Distanzen $d_{i-2,i-1}$ und $d_{i-1,i}$ das Distanz-Kriterium, gemäß dem der Abstand von $P_j$ zu einem der Endpunkte der Distanzen kleiner als das 1,5-fache der Distanzen selbst sein soll, nicht erfüllt. In Bezug auf die Distanz $d_{i,i+1}$ ist das Distanz-Kriterium erfüllt, jedoch nicht für die Distanz $d_{ij}$, sondern für die Distanz $d_{i+1,j}$. Deshalb wird im Unterschied zu Fig. 6 der Punkt $P_j$ nicht zwischen $P_i$ und $P_{i+1}$ einsortiert, sondern hinter dem Punkt $P_{i+1}$ angehängt.

Der Vorteil des soeben beschriebenen Distanzkriteriums besteht darin, das vereinzelt vorkommende Ungenauigkeiten nicht so schnell zum Abbruch eines Blocks führen. Allerdings werden aufgrund zu großer Toleranzen manchmal fälschlich Punkte einem Block zugeordnet. Liegen diese Punkte zu weit weg von der für einen Block berechneten Ausgleichsgeraden, unterbricht ein nachfolgend auf die Blöcke angewandter Linienextrahierer die Linie an diesem Punkt. In diesem Fall entstehen statt einer sicheren extrahierten Linie zwei Linien mit einer größeren stochastischen Unsicherheit. Daher wird in einer besonders bevorzugten Ausführungsform der Erfindung ein weiteres einschränkendes Kriterium für das Zuordnen eines Punktes zu einem Block verwendet. Gemäß diesem Kriterium wird zunächst die Ausgleichsgerade eines Blocks iterativ beim Hinzukommen eines neuen Punktes neu berechnet. Punkte, die zu weit von dieser Ausgleichsgeraden entfernt liegen, werden dann nicht in den Block übernommen. Für einen solchen, nicht in den Block übernommenen Punkt wird dann ein neuer Block gebildet.

In einer weiteren besonders bevorzugten Ausführungsform des soeben beschriebenen Verfahrens wird ferner nach der Durchführung eines Motorschwenks versucht, die erstellten Blöcke miteinander zu verknüpfen. Dies ist notwendig, wenn Flächen bei Beginn eines Motorschwenks erfasst, dann verloren und zum Ende des Motorschwenks noch einmal erfasst werden. In seltenen aber beobachtbaren Fällen schließen der Anfangspunkt des einen und der Endpunkt des anderen der so entstandenen zwei Blöcke aneinander an.

Nach der Bildung von Blöcken gemäß dem oben beschriebenen Verfahren wird nunmehr auf die einzelnen Blöcke ein Linienextraktionsverfahren gemäß dem Stand der Technik angewendet. Dies ist nunmehr möglich, da die einzelnen Punkte in sortierter Reihenfolge vorliegen. Es wird hierbei beispielsweise das anhand von Fig. 4 beschriebene Extraktionsverfahren verwendet.

Das soeben beschriebene erfindungsgemäße Verfahren hat den großen Vorteil, dass bei diesem Verfahren Punkte in so genannten "virtuellen Messebenen" detektiert werden können, so dass es möglich wird, mit dem erfindungsgemäßen Verfahren Messpunkte oberhalb der Sensoreinrichtung, insbesondere im Deckenbereich, zu ermitteln. Somit eignet sich das erfindungsgemäße Verfahren sehr gut zur Roboter-Navigation in Lagerhallen, denn dort ist eine Navigation in tieferen Ebenen oftmals nicht möglich, weil sich in solchen Hallen Transportgut befindet, das sehr oft seine Position wechselt.

**Patentansprüche**

1. Verfahren zur Detektion von Objekten mit einer schwenkbaren, einen Scansensor (2) umfassenden Sensoreinrichtung (1), bei dem:

   a) der Scansensor (2) Detektionsstrahlen (LB) zur Detektion von Objekten in einem Scanbereich innerhalb einer Scanebene aussendet, wobei die Position der Scanebene durch Verschwenken der Sensoreinrichtung (1) in einem Schwenkbereich verändert wird, wodurch eine Vielzahl von Detektionsebenen entstehen;
   b) durch die Detektionsstrahlen (LB) in den Detektionsebenen Detektionspunkte von Objekten in der Umgebung der Sensoreinrichtung (1) detektiert werden;
   c) aus den Detektionspunkten einer jeweiligen Detektionsebene Linien (L1, L2, L3) extrahiert werden;
   d) die Schnittpunkte der Linien (L1, L2, L3) mit einer oder mehreren vorbestimmten Messebenen (M) als Messpunkte (P) ermittelt werden;
   **dadurch gekennzeichnet, dass**
   e) die Messpunkte (P) in einer jeweiligen Messebene (M) in Blöcke (B1,..., B5) wie folgt einsortiert werden:

      - für einen einzusortierenden Messpunkt (P) wird derjenige Messpunkt (P) ausgewählt, der von den in bereits vorhandenen Blöcken (B1,..., B5) enthaltenen und ein vorgegebenes Distanzkriterium erfüllenden Messpunkten (P) den kleinsten Abstand zum einzusortierenden Messpunkt (P) aufweist, wobei das vorgegebene Distanzkriterium für einen jeweiligen Messpunkt (P) in einem jeweiligen Block (B1,..., B5) erfüllt ist, wenn die Distanz des einzusortierenden Messpunkts (P) zu dem jeweiligen Messpunkt (P) kleiner als ein Distanzmaß ist, welches von der Distanz des jeweiligen Messpunkts (P) zu einem benachbarten Messpunkt (P) des jeweiligen Blocks (B1,..., B5) abhängt;
- der einzusortierende Messpunkt (P) wird benachbart zu dem ausgewählten Messpunkt (P) in dem Block (B1,..., B5) einsortiert, der den ausgewählten Messpunkt (P) enthält; und

f) blockweise aus den Messpunkten (P) der in Schritt e) erzeugten Blöcke (B1,..., B5) Linien (L1, L2, L3) extrahiert werden, wodurch Strukturen von Objekten in den Messebenen (M) ermittelt werden.

2. Verfahren nach Anspruch 1, bei dem der einzusortierende Messpunkt (P) in Schritt e) hinter dem ausgewählten Messpunkt (P) einsortiert wird.

3. Verfahren nach Anspruch 1 oder 2, bei dem im Falle, dass in Schritt e) des Anspruchs 1 kein ausgewählter Messpunkt (P) ermittelbar ist, ein neuer Block (B1,..., B5) für den einzusortierenden Messpunkt (P) gebildet wird.

4. Verfahren nach einem der vorhergehenden Ansprüche, bei dem im Schritt e) im Falle, dass noch keine Blöcke (B1,..., B5) vorhanden sind, ein Block (B1,..., B5) durch den einzusortierenden Messpunkt (P) und dem Messpunkt (P) mit der kleinsten Distanz zu dem einzusortierenden Messpunkt (P) gebildet wird.

5. Verfahren nach einem der vorhergehenden Ansprüche, bei dem das vorgegebene Distanzkriterium für einen jeweiligen Messpunkt (P) in einem jeweiligen Block (B1,..., B5) dann erfüllt ist, wenn der einzusortierende Messpunkt (P) zu dem jeweiligen Messpunkt (P) eines Paars von benachbarten Messpunkten (P) in dem jeweiligen Block (B1,..., B5) eine Distanz aufweist, welche kleiner als die mit einem Faktor multiplizierte Distanz zwischen den Messpunkten (P) des Paars ist, wobei der Faktor größer oder gleich 1 ist.

6. Verfahren nach Anspruch 5, bei dem der Faktor kleiner als 2, vorzugsweise im Wesentlichen 1,5 ist.

7. Verfahren nach einem der vorhergehenden Ansprüche, bei dem der einzusortierende Messpunkt (P) nur dann in dem Block (B1,..., B5), der den ausgewählten Messpunkt enthält, in Schritt e) einsortiert wird, wenn die Distanz des ausgewählten Messpunkts (P) zum einzusortierenden Messpunkt kleiner als ein vorbestimmtes Absolutmaß ist.

8. Verfahren nach einem der vorhergehenden Ansprüche, bei dem der einzusortierenden Messpunkt nur dann in den Block (B1,..., B5), der den ausgewählten Messpunkt enthält, in Schritt e) einsortiert wird, wenn die Distanz zwischen dem einzusortierenden Messpunkt (P) und einer durch die Messpunkte (P) des Blocks (B1,..., B5) und dem einzusortierenden Messpunkt approximierte Ausgleichsgerade einen vorbestimmten Wert unterschreitet.

9. Verfahren nach einem der vorhergehenden Ansprüche, bei dem im Falle, dass ein jeweiliger Block (B1,..., B5) nur aus einem Messpunkt (P) besteht, der Messpunkt (P) dieses Blocks (B1,..., B5) als ein das vorgegebne Distanzkriterium erfüllender Messpunkt (P) eingestuft wird.

10. Verfahren nach einem der vorhergehenden Ansprüche, bei dem die Schritte e) und f) parallel zu den Schritten a) bis d) durchgeführt werden, wobei bei der Ermittlung eines neuen Messpunktes (P) in Schritt d) unmittelbar der Schritt e) durchgeführt wird.

11. Verfahren nach einem der vorhergehenden Ansprüche, bei dem nach einem Verschwenken der Sensoreinrichtung von einem Ende des Schwenkbereichs zum anderen Ende des Schwenkbereichs anhand eines Abstandskriteriums überprüft wird, ob erzeugte Blöcke (B1,..., B5) zu größeren Blöcken (B1,..., B5) zusammengefasst werden können.

12. Verfahren nach einem der vorhergehenden Ansprüche, bei dem die Extraktion der Linien (L1, L2, L3) in den Schritten c) und/oder f) des Anspruchs 1 mit Hilfe eines Divide-and-Conquer-Verfahrens durchgeführt wird.

13. Verfahren nach einem der vorhergehenden Ansprüche, bei dem die in Schritt f) extrahierten Linien (L1, L2, L3) mit Linien von vorab erfassten, in einem Speicher hinterlegten Objekten verglichen werden, um bei einer Übereinstimmung ein Fahrzeug, auf dem die Sensoreinrichtung (1) angeordnet ist, zu lokalisieren und hierdurch führerlos zu navigieren.

14. Verfahren nach Anspruch 13, bei dem zur Lokalisation des Fahrzeugs ein Kalman-Filter verwendet wird.

**15.** Verfahren nach einem der vorhergehenden Ansprüche, bei dem die Detektionsebenen sich im Wesentlichen in vertikaler Richtung erstreckende Ebenen sind und das Sensorsystem (1) um eine im Wesentlichen vertikale Achse (V) verschwenkt wird.

**16.** Verfahren nach einem der vorhergehenden Ansprüche, bei dem die Messebenen (M) sich im Wesentlichen in horizontaler Richtung erstreckende Ebenen sind.

**17.** Verfahren nach Anspruch 16, bei dem die Messebenen im Wesentlichen oberhalb des Sensorsystems (1) liegen.

**18.** Verfahren nach einem der vorhergehenden Ansprüche, bei dem der Schwenkbereich einen Winkelbereich von im Wesentlichen 90 Grad umfasst.

**19.** Verfahren nach einem der vorhergehenden Ansprüche, bei dem der Scanbereich einen Winkelbereich von wenigstens 180 Grad, insbesondere von im Wesentlichen 190 Grad, umfasst.

**20.** Verfahren nach einem der vorhergehenden Ansprüche, bei dem der Scansensor (2) beim Verschwenken in einem Neigungswinkel um eine vertikale Schwenkachse (V) nach oben gerichtet ist.

**21.** Verfahren nach Anspruch 20, bei dem der Neigungswinkel im Wesentlichen 45 Grad beträgt.

**22.** Verfahren nach einem der vorhergehenden Ansprüche, bei dem als Scansensor ein Laserscanner verwendet wird.

**23.** Vorrichtung zur Detektion von Objekten, umfassend:

- eine Sensoreinrichtung (1) mit einem Scansensor (2), wobei der Scansensor (2) im Betrieb Detektionsstrahlen (LB) zur Detektion von Objekten in einem Scanbereich innerhalb einer Scanebene aussendet, wobei die Position der Scanebene durch Verschwenken der Sensoreinrichtung (1) in einem Schwenkbereich verändert wird, wodurch eine Vielzahl von Detektionsebenen entstehen, und wobei durch die Detektionsstrahlen (LB) in den Detektionsebenen Detektionspunkt'e von Objekten in der Umgebung der Sensoreinrichtung (1) detektiert werden;
- eine Rechnereinheit, welche derart ausgestaltet ist, dass sie ein Verfahren mit folgenden Schritten ausführt:

aus den Detektionspunkten einer jeweiligen Detektionsebene werden Linien (L1, L2, L3) extrahiert und die Schnittpunkte der Linien mit einer oder mehreren vorbestimmten Messebenen (M) werden als Messpunkte (P) ermittelt;
**dadurch gekennzeichnet, dass** das von der Recheneinheit ausgeführte Verfahren folgende weitere Schritte aufweist:
die Messpunkte (P) in einer jeweiligen Messebene (M) werden in Blöcke (B1,..., B5) wie folgt einsortiert:

- für einen einzusortierenden Messpunkt (P) wird derjenige Messpunkt (P) ausgewählt, der von den in bereits vorhandenen Blöcken (B1,..., B5) enthaltenen und ein vorgegebenes Distanzkriterium erfüllenden Messpunkten (P) den kleinsten Abstand zum einzusortierenden. Messpunkt (P) aufweiset, wobei das vorgegebene Distanzkriterium für einen jeweiligen Messpunkt (P) in einem jeweiligen Block (B1,..., B5) erfüllt ist, wenn die Distanz des einzusortierenden Messpunkts (P) zu dem jeweiligen Messpunkt (P) kleiner als ein Distanzmaß ist, welches von der Distanz des jeweiligen Messpunkts (P) zu einem benachbarten Messpunkt (P) des jeweiligen Blocks (B1,..., B5) abhängt;
- der einzusortierende Messpunkt (P) wird benachbart zu dem ausgewählten Messpunkt (P) in dem Block (B1,..., B5) einsortiert, der den ausgewählten Messpunkt (P) enthält; und
aus den Messpunkten (P) der erzeugten Blöcke (B1,..., B5) werden blockweise Linien (L1, L2, L3) extrahiert.

**24.** Führerlos fahrendes Fahrzeug, umfassend eine Vorrichtung nach Anspruch 23, wobei die Vorrichtung zum führerlosen Navigieren des Fahrzeugs eingesetzt wird, indem die extrahierten Linien (L1, L2, L3) in der jeweiligen Messebene (M) mit vorab erfassten, in einem Speicher hinterlegten Linien von Objekten verglichen werden.

**25.** Fahrzeug nach Anspruch 24, wobei das Fahrzeug ein Roboter, insbesondere eine automatisch fahrender Gabelstapler oder eine automatisch fahrende Reinigungsmaschine, ist.

**Claims**

1. Method for detecting objects with a pivotable sensor device (1) which comprises a scan sensor (2), in which method:

   a) the scan sensor (2) emits detection beams (LB) for detecting objects in a scanning range within a scanning plane, wherein the position of the scanning plane is changed by pivoting the sensor device (1) in a swivel range, as a result of which a plurality of detection planes are produced;
   b) detection points of objects in the surroundings of the sensor device (1) are detected by means of the detection beams (LB) in the detection planes;
   c) lines (L1, L2, L3) are extracted from the detection points of a respective detection plane;
   d) the intersection points of the lines (L1, L2, L3) with one or more predetermined measuring planes (M) are determined as measuring points (P)
   **characterised in that**
   e) the measuring points (P) in a respective measuring plane (M) are classified into blocks (B1, ..., B5) as follows:

   - for a measuring point (P) which is to be classified the measuring point (P) which is selected from the measuring points (P) which are contained in already existing blocks (B1, ..., B5) and which meet a predefined distance criterion is the one which is at the shortest distance from the measuring point (P) to be classified, wherein the predetermined distance criterion for a respective measuring point (P) in a respective block (B1,..., B5) is met if the distance of the measuring point (P) to be classified from the respective measuring point (P) is shorter than a distance measure which depends on the distance of the respective measuring point (P) from an adjacent measuring point (P) of the respective block (B1,..., B5) ;
   - the measuring point (P) to be classified is placed, adjacent to the selected measuring point (P), in the block (B1,..., B5) which contains the selected measuring point (P); and

   f) lines (L1, L2, L3) are extracted on a block basis from the measuring points (P) of the blocks (B1, .... B5) generated in step e), as a result of which structures of objects in the measuring planes (M) are determined.

2. Method according to claim 1, wherein the measuring point (P) to be classified is placed behind the selected measuring point (P) in step e).

3. Method according to claim 1 or 2, wherein in the case that in step e) of claim 1 no selected measuring point (P) can be determined, a new block (B1,..., B5) is formed for the measuring point (P) which is to be classified.

4. Method according to one of the preceding claims, wherein in step e) in the case that no blocks (B1,..., B5) are yet present, a block (B1,..., B5) is formed by the measuring point (P) to be classified and the measuring point (P) having the shortest distance to the measuring point (P) to be classified.

5. Method according to one of the preceding claims, wherein the predefined distance criterion for a respective measuring point (P) in a respective block (B1,..., B5) is met if the measuring point (P) to be classified is at a distance from the respective measuring point (P) of a pair of adjacent measuring points (P) in the respective block (B1,..., B5) which distance is shorter than the distance multiplied by a factor between the measuring points (P) of the pair, wherein the factor is greater than or equal to 1.

6. Method according to claim 5, wherein the factor is less than 2, preferably essentially 1.5.

7. Method according to one of the preceding claims, wherein the measuring point (P) to be classified is only classified into the block (B1,..., B5), which contains the selected measuring point, in step e) if the distance of the selected measuring point (P) to the measuring point to be classified is shorter than a predetermined absolute measurement.

8. Method according to one of the preceding claims, wherein the measuring point to be classified is only classified into the block (B1,..., B5), which contains the selected measuring point, in step e), if the distance between the measuring point (P) to be classified and an approximated straight line of best fit through the measuring points (P) of the block (B1,..., B5) and the measuring point to be classified falls below a predetermined value.

9. Method according to one of the preceding claims, wherein in the case that a respective block (B1,..., B5) is only made up of one measuring point (P), the measuring point (P) of this block (B1,..., B5) is rated as a measuring point (P) that meets the predefined distance criterion.

10. Method according to one of the preceding claims, wherein the steps e) and f) are performed parallel to the steps a) to d), wherein when a new measuring point (P) is determined in step d), step e) is performed immediately.

11. Method according to one of the preceding claims, wherein after the sensor device has panned from one end of the swivel range to the other end of the swivel range, a distance criterion is used to check whether the generated blocks (B1,..., B5) can be combined to form bigger blocks (B1,..., B5) .

12. Method according to one of the preceding claims, wherein the extraction of the lines (L1, L2, L3) in the steps c) and/or f) of claim 1 is carried out using a divide-and-conquer method.

13. Method according to one of the preceding claims, wherein the lines (L1, L2, L3) extracted in step f) are compared with lines from previously determined objects stored in a memory, in order in the event of the lines matching to fix the position of a vehicle to which the sensor device (1) is assigned and hence to navigate said vehicle without a driver.

14. Method according to claim 13, wherein a Kalman filter is used to fix the position of the vehicle.

15. Method according to one of the preceding claims, wherein the detection planes are in planes extending essentially in a vertical direction and the sensor system (1) is pivoted around an essentially vertical axis (V).

16. Method according to one of the preceding claims, wherein the measuring planes (M) are in planes extending essentially in a horizontal direction.

17. Method according to claim 16, wherein the measuring planes are essentially above the sensor system (1).

18. The method as claimed in one of the preceding claims, wherein the swivel range includes an angle range of essentially 90 degrees.

19. Method according to one of the preceding claims, wherein the scanning range includes an angle range of at least 180 degrees, in particular of essentially 190 degrees.

20. Method according to one of the preceding claims, wherein the scan sensor (2) when pivoted is oriented in an upwards direction at an angle of inclination around a vertical swivelling axis (V).

21. Method according to claim 20, wherein the angle of inclination is essentially 45 degrees.

22. Method according to one of the preceding claims, wherein a laser scanner is used as the scan sensor.

23. Device for detecting objects, comprising:

   - a sensor device (1) with a scan sensor (2), wherein, when in operation, the scan sensor (2) emits detection beams (LB) for detecting objects in a scanning range within a scanning plane, wherein the position of the scanning plane is changed by pivoting the sensor device (1) in a swivel range, as a result of which a plurality of detection planes are produced, and wherein detection points of objects in the surroundings of the sensor device (1) are detected by means of the detection beams (LB) in the detection planes;
   - a computer unit, which is designed in such a way that it performs a method with the following steps:

      lines (L1, L2, L3) are extracted from the detection points of a respective detection plane and the intersection points of the lines with one or several predetermined measuring planes (M) are determined as measuring points (P);

   **characterised in that** the method implemented by the computer unit comprises the following additional steps:

   the measuring points (P) in a respective measuring plane (M) are classified into blocks (B1,..., B5) as follows:

      - for a measuring point (P) which is to be classified the measuring point (P) which is selected from the measuring points (P) which are contained in already existing blocks (B1, ..., B5) and which meet a predefined distance criterion is the one which is at the shortest distance from the measuring point (P) to be classified, wherein the predetermined distance criterion for a respective measuring point (P) in a respective block (B1,..., B5) is met if the distance of the measuring point (P) to be classified from the respective measuring point (P) is shorter than a distance measure which depends on the distance of the respective measuring point (P) from an adjacent measuring point (P) of the respective block (B1,..., B5) ;
- the measuring point (P) to be classified is placed adjacent to the selected measuring point (P), in the block (B1,..., B5) which contains the selected measuring point (P); and

lines (L1, L2, L3) are extracted on a block basis from the measuring points (P) of the generated blocks (B1,..., B5) .

24. Vehicle operating without a driver, comprising a device according to claim 23, wherein the device is used to navigate the vehicle without a driver and so doing by comparing the extracted lines (L1, L2, L3) in the respective measuring plane (M) with lines of objects registered beforehand and stored in a memory.

25. Vehicle according to claim 24, wherein the vehicle is a robot, in particular an automatically operating fork lift truck or an automatically operating cleaning machine.

**Revendications**

1. Procédé de détection d'objets avec un dispositif pivotant à capteurs (1) comportant un capteur scanneur (2), dans lequel

   a) le capteur scanneur (2) émet des rayons de détection (LB) pour détecter des objets dans une zone de scannage dans les limites d'un plan de scannage, la position du plan de scannage étant modifiée par pivotement du dispositif à capteurs (1) dans une plage de pivotement, ceci créant un pluralité de plans de détection ;
   b) des points de détection d'objets sont détectés dans l'environnement du dispositif à capteurs (1) par les rayons de détection (LB) dans les plans de détection ;
   c) des lignes (L1, L2, L3) sont extraites des points de détection d'un plan de détection respectif ;
   d) les points d'intersection des lignes (L1, L2, L3) avec un ou plusieurs plans de mesure (M) prédéterminés sont déterminés comme étant des points de mesure (P),
   **caractérisé en ce que**
   e) les points de mesure (P) d'un plan de mesure respectif (M) sont classés en blocs (B1, ..., B5) comme suit :

   - pour un point de mesure (P) à classer est sélectionné le point de mesure (P) qui, parmi les points de mesure (P) qui sont contenus dans des blocs (B1, ..., B5) déjà présents et qui remplissent un critère de distance spécifié, présente la plus petite distance par rapport au point de mesure (P) à classer, le critère de distance spécifié étant rempli, pour tout point de mesure (P) dans tout bloc (B1, ..., B5), lorsque la distance entre le point de mesure (P) à classer et le point de mesure respectif (P) est inférieure à une mesure de distance qui dépend de la distance entre le point de mesure respectif (P) et un point de mesure voisin (P) du bloc respectif (B1, ..., B5) ;
   - le point de mesure (P) à classer est classé de manière à être voisin du point de mesure sélectionné (P) dans le bloc (B1, ..., B5) qui contient le point de mesure sélectionné (P) et

   f) des lignes (L1, L2, L3) sont extraites, bloc par bloc, des points de mesure (P) des blocs (B1, ..., B5) générés à l'étape e), ceci permettant de déterminer des structures d'objets dans les plans de mesure (M) .

2. Procédé selon la revendication 1, dans lequel le point de mesure (P) à classer est classé, à l'étape e), derrière le point de mesure (P) sélectionné.

3. Procédé selon la revendication 1 ou 2, dans lequel un nouveau bloc (B1, ..., B5) est formé pour le point de mesure (P) à classer si aucun point de mesure (P) sélectionné ne peut être déterminé à l'étape e) de la revendication 1.

4. Procédé selon l'une des revendications précédentes, dans lequel un bloc (B1, ..., B5) est formé, à l'étape e), par le point de mesure (P) à classer et le point de mesure (P) qui présente la plus petite distance par rapport au point de mesure (P) à classer s'il n'y a pas encore de blocs (B1, ..., B5) .

5. Procédé selon l'une des revendications précédentes, dans lequel le critère de distance spécifié est rempli, pour tout point de mesure (P) dans tout bloc (B1, ..., B5), lorsque le point de mesure (P) à classer présente, par rapport au point de mesure respectif (P) d'un couple de points de mesure voisins (P) dans le bloc respectif (B1, ..., B5), une distance qui est inférieure à la distance, multipliée par un facteur, entre les points de mesure (P) du couple, le facteur étant supérieur ou égal à 1.

**6.** Procédé selon la revendication 5, dans lequel le facteur est inférieur à 2 et est de préférence sensiblement de 1,5.

**7.** Procédé selon l'une des revendications précédentes, dans lequel le point de mesure (P) à classer n'est classé, à l'étape e), dans le bloc (B1, ..., B5) qui contient le point de mesure sélectionné que si la distance entre le point de mesure sélectionné (P) et le point de mesure à classer est inférieure à une mesure absolue prédéterminée.

**8.** Procédé selon l'une des revendications précédentes, dans lequel le point de mesure à classer n'est classé, à l'étape e), dans le bloc (B1, ..., B5) qui contient le point de mesure sélectionné que si la distance entre le point de mesure (P) à classer et une droite d'interpolation approximée par les points de mesure (P) du bloc (B1, ..., B5) et le point de mesure à classer tombe en dessous d'une valeur prédéterminée.

**9.** Procédé selon l'une des revendications précédentes, dans lequel, lorsqu'un bloc respectif (B1, ..., B5) est composé uniquement d'un point de mesure (P), le point de mesure (P) de ce bloc (B1, ..., B5) est classé comme point de mesure (P) ne remplissant pas le critère de distance spécifié.

**10.** Procédé selon l'une des revendications précédentes, dans lequel les étapes e) et f) sont exécutées parallèlement aux étapes a) à d), l'étape e) étant exécutée directement lorsqu'un nouveau point de mesure est déterminé à l'étape d).

**11.** Procédé selon l'une des revendications précédentes, dans lequel il est vérifié, après un pivotement du dispositif à capteurs d'une extrémité de la plage de pivotement vers l'autre extrémité de la plage de pivotement, à l'aide d'un critère de distance, si des blocs générés (B1, ..., B5) peuvent être regroupés en blocs (B1, ..., B5) plus grands.

**12.** Procédé selon l'une des revendications précédentes, dans lequel l'extraction des lignes (L1, L2, L3), aux étapes c) et/ou f) de la revendication 1, est effectuée à l'aide d'une méthode Divide-and-Conquer.

**13.** Procédé selon l'une des revendications précédentes, dans lequel les lignes (L1, L2, L3) extraites à l'étape f) sont comparées avec des lignes d'objets détectés préalablement et déposés dans une mémoire pour, en cas de concordance, localiser un véhicule sur lequel le dispositif à capteurs (1) est situé et ainsi le piloter sans conducteur.

**14.** Procédé selon la revendication 13, dans lequel un filtre de Kalman est utilisé pour localiser le véhicule.

**15.** Procédé selon l'une des revendications précédentes, dans lequel les plans de détection sont des plans qui s'étendent sensiblement dans le sens vertical et le système de capteurs (1) subit un pivotement autour d'un axe (V) sensiblement vertical.

**16.** Procédé selon l'une des revendications précédentes, dans lequel les plans de mesure (M) sont des plans qui s'étendent sensiblement dans le sens horizontal.

**17.** Procédé selon la revendication 16, dans lequel les plans de mesure sont situés sensiblement au-dessus du système de capteurs (1).

**18.** Procédé selon l'une des revendications précédentes, dans lequel la zone de pivotement couvre une plage angulaire de sensiblement 90 degrés.

**19.** Procédé selon l'une des revendications précédentes, dans lequel la zone de scannage couvre une plage angulaire d'au moins 180 degrés, et plus particulièrement de sensiblement 190 degrés.

**20.** Procédé selon l'une des revendications précédentes, dans lequel le capteur scanneur (2) est dirigé vers le haut lors du pivotement selon un angle d'inclinaison autour d'un axe de pivotement vertical (V).

**21.** Procédé selon la revendication 20, dans lequel l'angle d'inclinaison est de sensiblement 45 degrés.

**22.** Procédé selon l'une des revendications précédentes, dans lequel un scanneur laser est utilisé en tant que capteur scanneur.

**23.** Dispositif de détection d'objets, comprenant :

- un dispositif à capteurs (1) comportant un capteur scanneur (2), le capteur scanneur (2) émettant, pendant son fonctionnement, des rayons de détection (LB) pour détecter des objets dans une zone de scannage dans les limites d'un plan de scannage, la position du plan de scannage étant modifiée par pivotement du dispositif à capteurs (1) dans une plage de pivotement, ceci créant un pluralité de plans de détection, et des points de détection d'objets étant détectés dans l'environnement du dispositif à capteurs (1) par les rayons de détection (LB) dans les plans de détection ;
- une unité informatique qui est réalisée de manière telle qu'elle exécute un procédé comportant les étapes suivantes :
- des lignes (L1, L2, L3) sont extraites des points de détection d'un plan de détection respectif et les points d'intersection des lignes avec un ou plusieurs plans de mesure (M) prédéterminés sont déterminés comme étant des points de mesure (P),

**caractérisé en ce que** le procédé exécuté par l'unité informatique comporte les autres étapes suivantes :

- les point de mesure (P) d'un plan de mesure respectif (M) sont classés en blocs (B1, ..., B5) comme suit :
- pour un point de mesure (P) à classer est sélectionné le point de mesure (P) qui, parmi les points de mesure (P) qui sont contenus dans des blocs (B1, ..., B5) déjà présents et qui remplissent un critère de distance spécifié, présente la plus petite distance par rapport au point de mesure (P) à classer, le critère de distance spécifié étant rempli, pour tout point de mesure (P) dans tout bloc (B1, ..., B5), lorsque la distance entre le point de mesure (P) à classer et le point de mesure respectif (P) est inférieure à une mesure de distance qui dépend de la distance entre le point de mesure respectif (P) et un point de mesure voisin (P) du bloc respectif (B1, ..., B5) ;
- le point de mesure (P) à classer est classé de manière à être voisin du point de mesure sélectionné (P) dans le bloc (B1, ..., B5) qui contient le point de mesure sélectionné (P) et
- des lignes (L1, L2, L3) sont extraites, bloc par bloc, des points de mesure (P) des blocs (B1, ..., B5) qui ont été générés.

**24.** Véhicule piloté sans conducteur, comprenant un dispositif selon la revendication 23, le dispositif étant mis en oeuvre pour le pilotage du véhicule sans conducteur par comparaison des lignes extraites (L1, L2, L3) dans le plan de mesure respectif (M) avec des lignes d'objets détectées préalablement et déposées dans une mémoire.

**25.** Véhicule selon la revendication 24, le véhicule étant un robot, en particulier un chariot élévateur à fourche à pilotage automatique ou une machine de nettoyage à pilotage automatique.

FIG 1

FIG 2

FIG 3

EP 1 987 371 B1

# FIG 4

1.)

2.)

3.)

# FIG 5

1.)

2.)

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19937185
- US 6466946 B